# EUROPEAN PATENT APPLICATION

(11) **EP 1 691 256 A1**
(43) Date of publication of application: **16.08.2006**
(21) Application number: 05101044.5
(22) Date of filing: 11.02.2005
(51) Int. Cl.: G06F 3/023

(54) **Apparatus and method of determining characters typed in a mobile communication device**

(71) Applicant: Research In Motion Limited, Waterloo, Ontario N2L 3W8 (CA)
(72) Inventor: Yang, Lianghua, Kitchener, Ontario N2G 1W5 (CA)
(74) Representative: Rickard, David John

(57) **Abstract**

The invention is directed a method for use in conjunction with a keyboard of a mobile communication device for determining which of several characters designated by any one of a number of particular character keys is intended by a user, comprising the steps of sensing depression of a character position select key; sensing depression of one of said character keys; and designating depressions of said character key to indicate a character corresponding to a unique combination of said depressed character position select key and said depressed character key.

## Description

The invention relates generally to mobile communication devices. More particularly, the invention relates to an apparatus and method of determining characters typed in a mobile communication device.

In the world today, many individuals rely on mobile communication devices in order to stay in touch with other individuals when they are not at home or the office such as when they are on vacation, away at a conference or in a meeting. These individuals generally rely on their mobile communication device to receive phone calls or email/text messages. With phone calls, the individual is able to verbally communicate with the other party, however, there are instances when a phone call is not possible such as when the individual is in a meeting or a location where silence is required. Also, when the individual receives an email or text message, the sender may be waiting for an immediate response from the individual. In these cases, the individual is required to type in a text message or an email by using the keypad/keyboard of the mobile communication device.

Currently, many mobile communication devices provide the opportunity for the individual to interact with a keypad/keyboard to perform various functions such as to send emails or text messages in response to communication from other individuals. Other interactions with the keypad/keyboard include functions such as accessing the Internet or entering information such as appointments, personal information or documents.

However, many of these keyboards, or keypads, are cumbersome and difficult to use since they are quite large and include one alphabetic or numeric character per key which results in a large number of keys. In order to decrease the size of the mobile communication device, the size of the keypad/keyboard is then decreased by making the keys smaller, however, they may become difficult to individually press, especially for individuals with large hands causing individuals to press a plurality of keys while trying to simply press one.

In some mobile communication devices, in order to provide larger keys but to maintain the same overall keypad/keyboard size, more than one character is included on a separate key. However, this may be troublesome for an individual who would then have to press a key multiple times in order to select the required character.

It is, therefore, desirable to provide a novel apparatus and method of determining characters typed in a mobile communication device.

### SUMMARY

It is an object of the invention to obviate or mitigate at least one disadvantage of previous apparatus and methods of determining characters typed in a mobile communication device.

In a first aspect, the invention provides a method for use in conjunction with a keyboard of a mobile communication device for determining which of several characters designated by any one of a number of particular character keys is intended by an individual, comprising the steps of sensing depression of a character position select key; sensing depression of one of the character keys; and designating depressions of the character key to indicate a character corresponding to a unique combination of the depressed character position select key and the depressed character key.

In another aspect, there is provided for use in conjunction with a keyboard of a mobile communication device, a method of determining which of several characters designated by any one of a number of particular character keys is intended by a user, comprising the steps of sensing depression of a first key; determining if depressed key is a character position select key; and sensing depression of a second key; wherein if the first key is a character position key and the second key is a character key; selecting a character associated with the character key corresponding to the character position select key.

Other aspects and features of the invention will become apparent to those ordinarily skilled in the art upon review of the following description of specific embodiments of the invention in conjunction with the accompanying figures.

### BRIEF DESCRIPTION OF THE DRAWINGS

Embodiments of the invention will now be described, by way of example only, with reference to the attached Figures, wherein:
Figure 1 is a schematic diagram of apparatus for determining typed characters in a mobile communication device;
Figure 2 is a flowchart of a method of determining typed characters in accordance with an embodiment of the invention;
Figure 3 is a schematic diagram of a second embodiment of apparatus for determining typed characters in a mobile communication device;
Figure 4 is a flowchart of a method of determining characters typed in a mobile communication device in accordance with the mobile communication device of Figure 3;
Figure 5 is a flowchart of an alternative method of determining typed characters in a mobile communication device;
Figure 6 is a flowchart of a further method of determining typed characters in a mobile communication device;
Figures 7a and 7b are a flowchart of yet another method of determining characters typed in a mobile communication device; and
Figures 8a and 8b are a flowchart of a further method of determining characters typed in a mobile communication device.

### DETAILED DESCRIPTION

Generally, the invention provides a method and system for determining which characters have been typed, or depressed, in a mobile communication device.

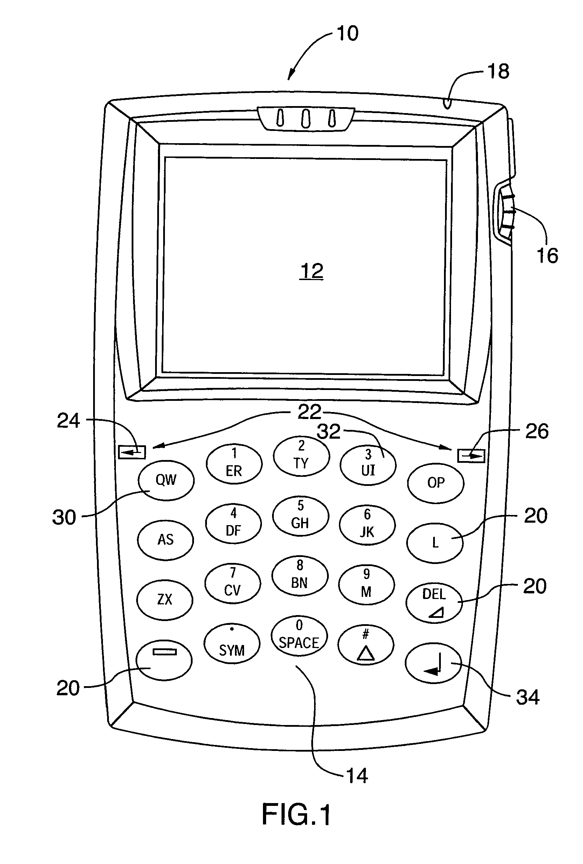

Turning to Figure 1, a schematic diagram of a mobile communication device 10 is shown. The mobile communication device 10 comprises a viewing area 12, such as a display screen, along with a keypad 14, or keyboard, for entering text into the communication device 10. A scroll button 16, the operation of which will be understood by one skilled in the art is provided on the side of the communication device 10 while an indicator light 18 is provided along the top to indicate various states of the mobile communication device 10 to the individual using the device 10 such as message received, power on or standby.

The keypad 14, or keyboard, includes a plurality of keys 20 which represent multiple alphabetic characters 30, a combination of multiple alphabetic-numeric characters 32 or function keys 34 such as return, space bar or shift. The mobile communication device 10 also includes a pair of character position select keys 22, seen as directional keys in Figure 1, which include a left directional key 24 and a right directional key 26. The directional keys 24 and 26 are preferably located at opposite ends along a top edge of the keypad 14. When the mobile communication device 10 is not in a text entry mode, such as when the device is in a game play mode, the directional keys 24 and 26 may be used as cursor keys to move a cursor left or right.

A processor within the mobile communication device 20 generally waits for the individual to interact with the mobile communication device 10 such as with the scroll bar 16 or the keypad 14. In operation, when an individual wishes to enter text into the mobile communication device 10, the individual depresses one of the keys 20 in the keypad 14.

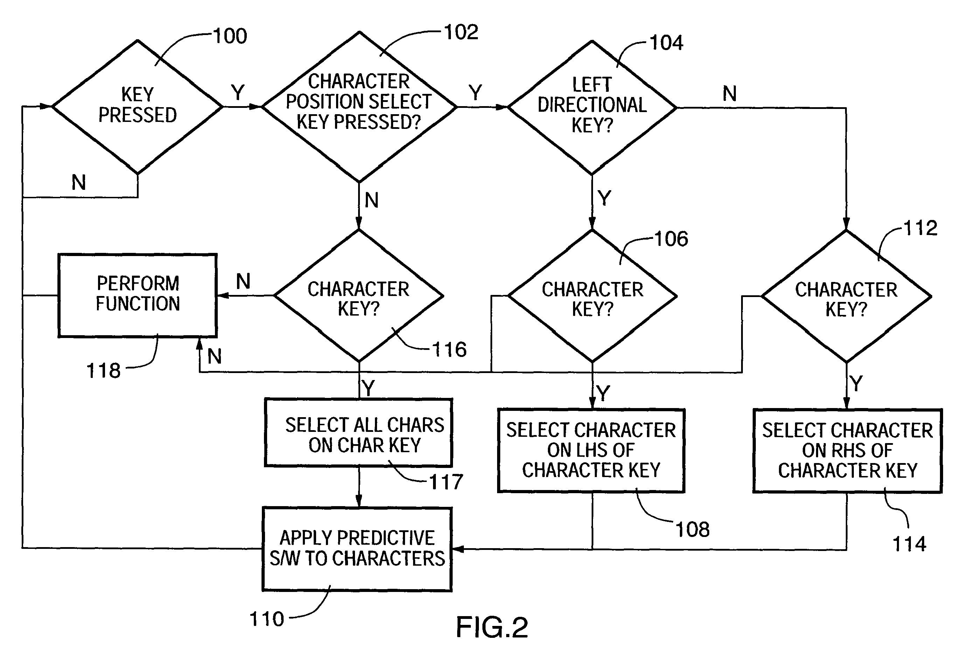

Turning to Figure 2, a flowchart outlining a method of determining typed characters in a mobile communication device is shown. After the processor senses that the individual has interacted with the mobile communication device 10, a check is initially performed to verify whether or not a key 20 or 22 has been depressed (step 100). If no key is pressed, the processor performs the requested function and then continues to wait until a key is pressed (step 100) unless the mobile communication device has been powered off.

Once it is sensed that a key 20 or 22 has been depressed, a check is performed to verify whether or not the key that was depressed was one of the character position select keys 22 (step 102). If a character position select key was depressed, a check is then performed to verify if the left directional key 24 was depressed (step 104). If the left directional key 24 has been depressed, a check is performed to see if the succeeding key that is depressed is one of the multiple alphabetic characters 30 or one of the multiple alphabetic-numeric characters 32 (step 106). If a multiple alphabetic character key 30 or a multiple alphabetic-numeric character key 32 has been depressed, the left alphabetic character listed on the surface of the key is then selected and entered into the processor (step 108) of the mobile communication device 10. In this embodiment, the individual is required to hold down the character position select key 22 while the multi-alphabetic character key 30 or multiple alphabetic-numeric key 32 is depressed. Alternatively, once the depression of a character position select key is sensed by the processor, the individual may release the key prior to depressing one of the multi-alphabetic character keys or multiple alphabetic-numeric keys. This aspect is preferably determined by the manufacturer and pre-programmed into the processor.

Predictive software, preferably stored in the processor, may then be applied to the current set of stored characters to determine if the letters form a word which may be predicted by the software (step 110). After applying the predictive software, the processor returns to sensing when a key is depressed (step 100). Alternatively, if the succeeding key is not one of the multiple alphabetic character keys 30 or multiple alphabetic-numeric character keys 32, the processor performs the selected function such as Return or Delete (step 118) and then returns to sensing if a key is pressed (step 100).

Alternatively, if, at step 104, the left directional key 24 has not been depressed, by default, the right directional key 26 has been depressed since a character position select key has been depressed (as determined at step 102). A check is then performed to see if the succeeding key that is depressed is one of the multiple alphabetic characters 30 or one of the multiple alphabetic-numeric characters keys 32 (step 112). If a multiple alphabetic character key 30 or a multiple alphabetic-numeric character key 32 has been depressed, the right alphabetic character, listed on the surface of the key is then selected and entered into the processor (step 114) of the mobile communication device. After this step, predictive software is then applied to the current set of stored characters to determine if the letters form a word which may be predicted by the software (step 110). After applying the predictive software, the processor returns to sensing when a key is depressed (step 100). Alternatively, if the succeeding key is not one of the multiple alphabetic character keys 30 or multiple alphabetic-numeric character keys 32, the processor performs the selected function such as Return or Delete (step 118) and then returns to sensing when a key is pressed (step 100).

If no character position select key depression has been sensed at step 102, a check is performed to see if the key that is depressed is one of the multiple alphabetic character key 30 or multiple alphabetic-numeric character key 32 (step 116). If a multiple alphabetic character key 30 or a multiple alphabetic-numeric character key 32 has been depressed, each of the characters listed on the surface of the depressed key (in this embodiment, two) are entered (step 117) into the processor and the plurality of character groupings corresponding to the depressed character key and the current set of stored characters are sensed and predictive software is applied to the plurality of character groupings in order to determine if the characters form a word (step 110). In this manner, a greater number of words are possible since the depression of the character key represents more than one character. The processor then returns to sensing if a key is depressed (step 100). Alternatively, if the key that is depressed is a function key, this is sensed by the processor and the function performed (step 118).

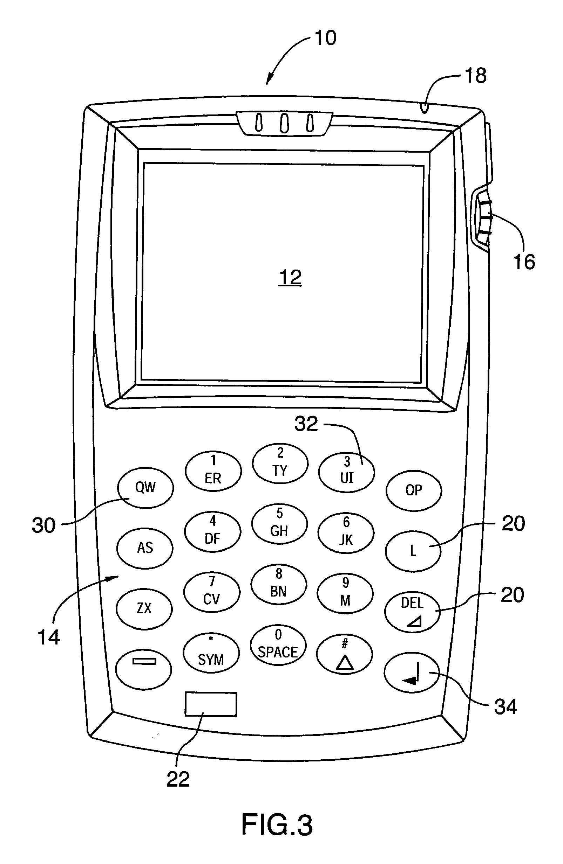

Figure 3 shows a second embodiment of a mobile communication device for use with one of the methods of the invention. The mobile communication device 10 includes much of the same structure as the mobile communication device of Figure 1 with the difference being that there is only one character position select key 22. In this embodiment, the mobile communication device processor is pre-programmed to recognize that if the character position select key 22 is depressed prior to a multiple alphabetic character key 30 or multiple alphabetic-numeric character key 32 being depressed, the character in a pre-determined position on the multiple-alphabetic character key is selected. For instance, the processor may be pre-programmed so that if the character position select key is depressed, the character on the right hand side of the depressed character key is selected. The mobile communication device also includes a processor (not shown) housed within.

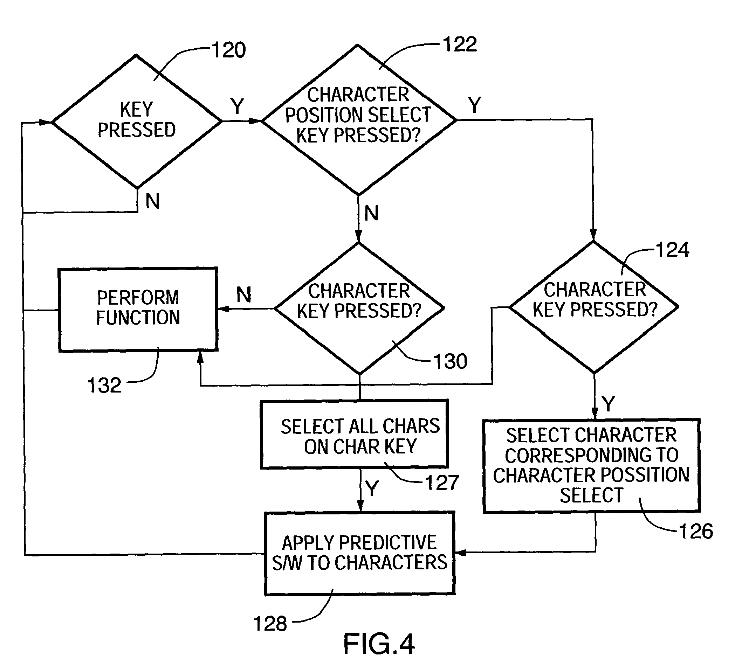

Turning to Figure 4, a flowchart outlining a method of determining typed characters in a mobile communication device for the mobile communication device embodiment disclosed in Figure 3 is shown. Initially, a check is performed to verify if a key has been depressed (step 120). If a key depression is not sensed, the processor continues to wait for a key to be depressed. However, if the processor senses that a key has been depressed, a check is performed to verify if the key is the character position select key (step 122). If the character position select key has been depressed, a check is performed to verify if the succeeding key pressed is a character key (step 124). If the succeeding key is a multiple alphabetic character key 30 or a multiple alphabetic-numeric character key 32, the processor selects the character which corresponds with the predetermined character position. As disclosed above, the character position is determined by the manufacturer who implements the method of the invention either via hardware, software, firmware or a combination of these options. After the character has been selected (step 126) and is entered into the processor, predictive software is applied to the group of stored characters (step 128) in order to determine if a word may be formed by the group of stored characters. After applying the predictive software, the processor returns to await the next key depression (step 120).

Alternatively, if the succeeding key is not one of the multiple alphabetic character keys 30 or multiple alphabetic-numeric character keys 32, the processor performs the selected function such as Return or Delete (step 132) and then returns to sensing if a key is pressed (step 120).

If the character position select key (step 122) has not been depressed, the processor checks to see if a multiple alphabetic character key 30 or a multiple alphabetic-numeric character key 32 has been pressed (step 130).
If one of the multiple alphabetic or multiple alphabetic-numeric character keys has been depressed, each of the alphabetic characters are added (step 127) to the current group of stored characters and predictive software applied to the multiple groups of characters (step 128) in order to determine if a word may be formed by the multiple groups of characters. After applying the predictive software, the processor returns to await the next key depression (step 120).

However, if a character key is not depressed at step 130, the processor determines which function key has been depressed and calls the corresponding module in order to perform the function (step 132) before returning to sensing if a key has been depressed (step 120).

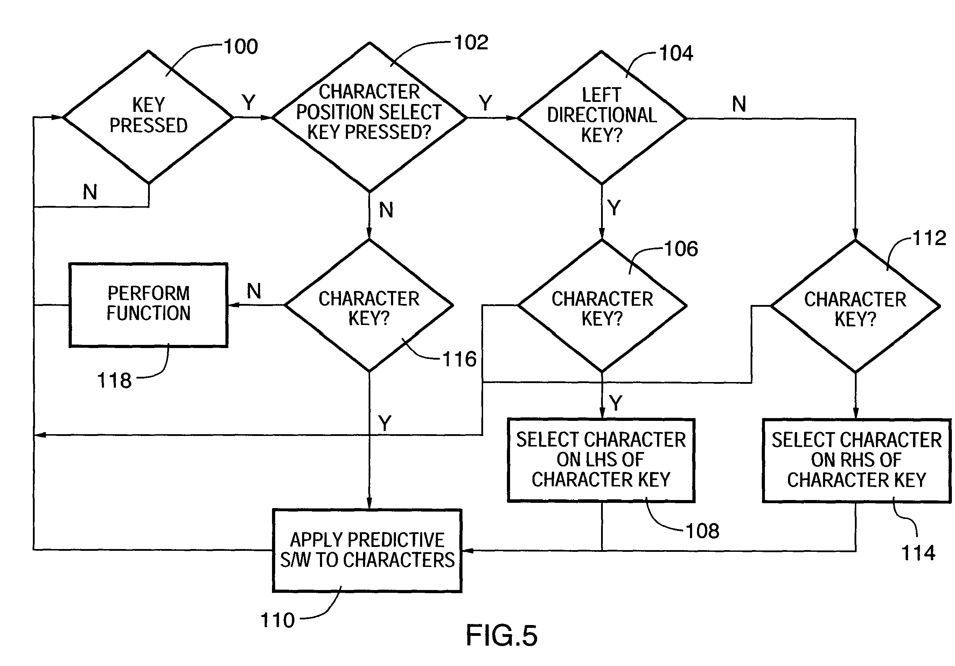

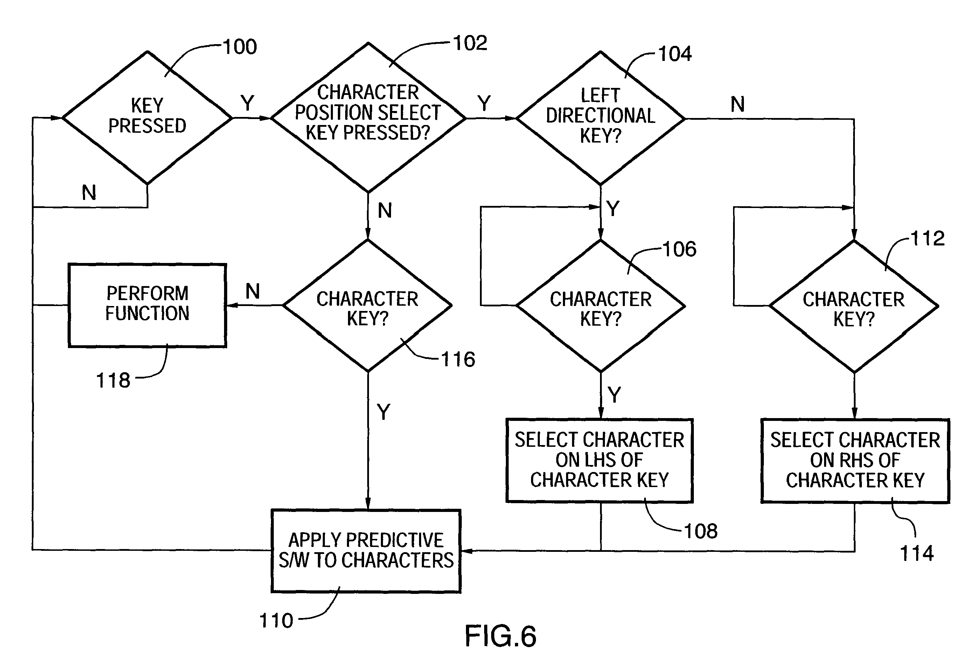

Figures 5 and 6 provide further embodiments of methods of determining typed characters in a mobile communication device. The methods of Figures 5 and 6 are the same as the method outlined in Figure 2 with the difference being how the processor handles the situation when a character key is not depressed at steps 106 or 112. As shown in Figure 5, if a character key is not depressed at step 106 or step 112, the processor simply returns to sensing when a key is pressed (step 100).

As shown in Figure 6, if a character key is not depressed at step 106 or step 112, the processor continues to wait until a character key is pressed (i.e. the processor loops back to step 106 or step 112, respectively).

It will be understood that both of these embodiments (in Figures 5 and 6) may be implemented for step 124 of Figure 4, when a character key is not pressed after the character position select key has been sensed.

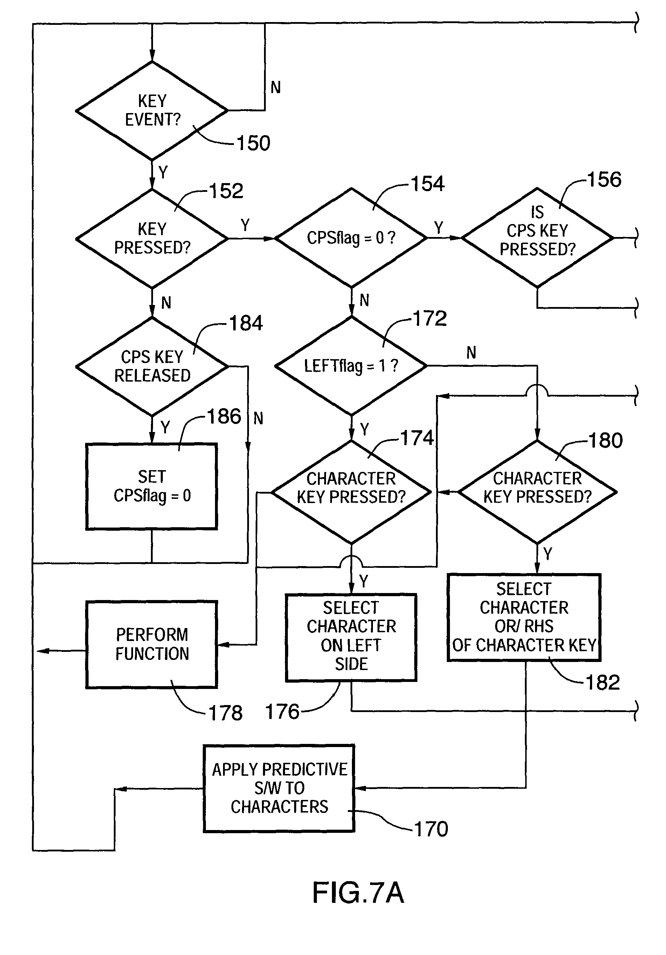

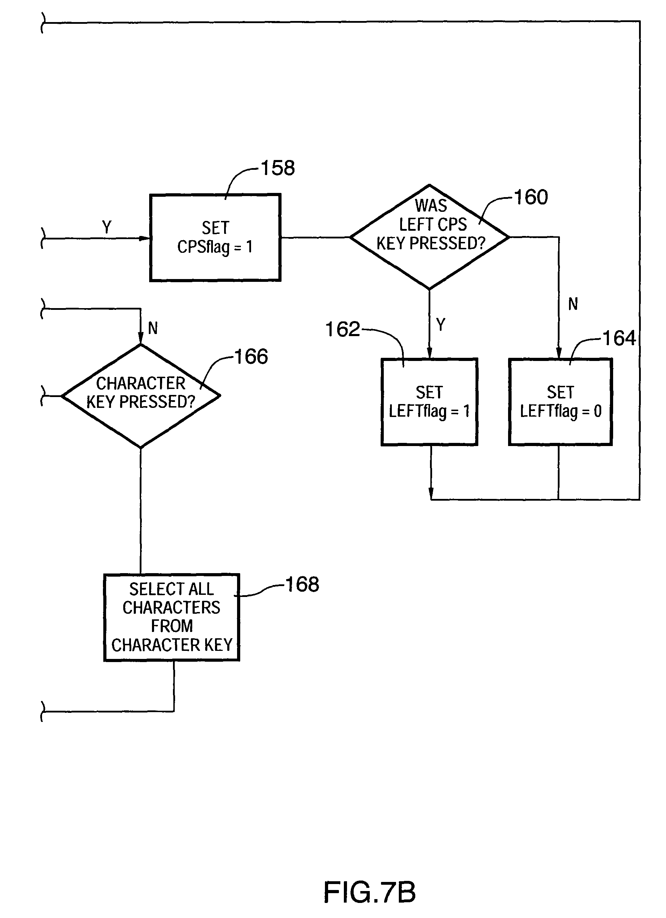

Turning to Figure 7, a further embodiment of a method of determining typed characters in a mobile communication device for use with the mobile communication device of Figure 1 is shown.

Initially, the processor awaits a key event (step 150). A key event may be described as either a key being pressed or a key being released. After a key event has been sensed, a check is performed to verify if a key has been pressed (step 152).

If a key has been pressed, a check is performed to see if a variable CPSflag has been set to 0 (step 154). This variable may be stored in the processor or in memory within the mobile communication device which represents whether or not a character position select key has been previously pressed. If CPSflag = 0, then a check is performed to verify if the key that is pressed is a character position select (CPS) key (step 156). If the pressed key is a character position select key, CPSflag is set to 1 (step 158). After setting CPSflag equal to 1, a check is performed to verify if the left directional key 24 is pressed (step 160). If the left directional key 24 is pressed, a variable LEFTflag is set to 1 (step 162), otherwise, LEFTflag is set to 0 (step 164). The variable LEFTflag simply tracks which of the two directional keys has been pressed so that the correct character is selected for processing. After the variable LEFTflag has been set, the processor waits for the next key event (step 150).

If, at step 156, a character position select key is not pressed, the processor determines whether or not a character key is pressed (step 166). If a character key is pressed, the characters corresponding to the depressed character key are selected (step 168) and added to the current group of characters stored in the processor and then predictive software is applied to the groups of characters (step 170) to determine if there are any possible words corresponding with the group of characters before returning to wait for the next key event (step 150). If a character key is not pressed (step 166), then the function corresponding to the pressed key is performed (step 178) before returning to wait for the next key event (step 150).

If, at step 154, the variable CPSflag is not equal to 0, then a check is performed to verify whether or not the variable LEFTflag has been set to 1 (step 172) indicating that the left directional key has been pressed. If LEFTflag is equal to 1, a check is performed to verify that the key that is pressed is a character key (step 174). If the key is a multiple alphabetic character key 30 or multiple alphabetic-numeric character key 32, then the character on the left side of the pressed key is selected (step 176) and sent to the processor where predictive software is then applied to the set of stored characters (step 170) to determine if a defined word corresponds with the set of stored collected characters before returning to wait for the next key event (step 150). However, if at step 174, a function key is pressed, then the function corresponding to the depressed key is performed (step 178) before the processor returns to wait for the next key event (step 150).

If LEFTflag does not equal 1 (at step 172), this indicates that the right directional key has been previously pressed. A check is then performed to verify that the key that is pressed is a character key (step 180). If the key is a multiple alphabetic character key 30 or multiple alphabetic-numeric character key 32, then the character on the right side of the pressed key is selected (step 182) and sent to the processor where predictive software is then applied to the set of stored characters (step 170) to determine if a defined word corresponds with the set of stored characters before the processor returns to wait for the next key event (step 150). However, if at step 180, a function key is pressed, then the function corresponding to the depressed key is performed (step 178) before returning to wait for the next key event (step 150).

Alternatively, at step 152, if a key has not been depressed (i.e. a key is released), a check is performed to verify whether or not the released key is a character position select key (step 184). If the released key is a character position select key, then CPSflag is set to 0 (step 186) and the processor returns to wait for the next key event (step 150). However, if the released key is not a character position select key (at step 184), then the processor immediately returns to wait for the next key event (step 150).

In this embodiment, if the user decides to hold down a character position select key, so that consecutive characters are selected from the left or right hand side of a multiple alphabetic character key 30 or multiple alphabetic-numeric character key 32, this is controlled by steps 184 and 186 which sets the CPSflag to 0 only after a character position select key has been released.

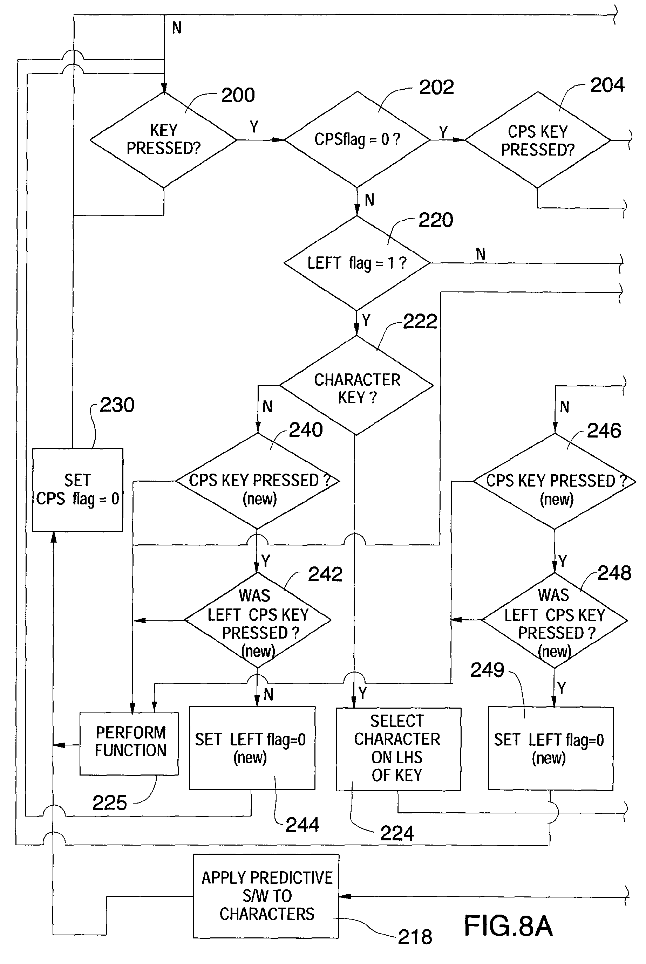

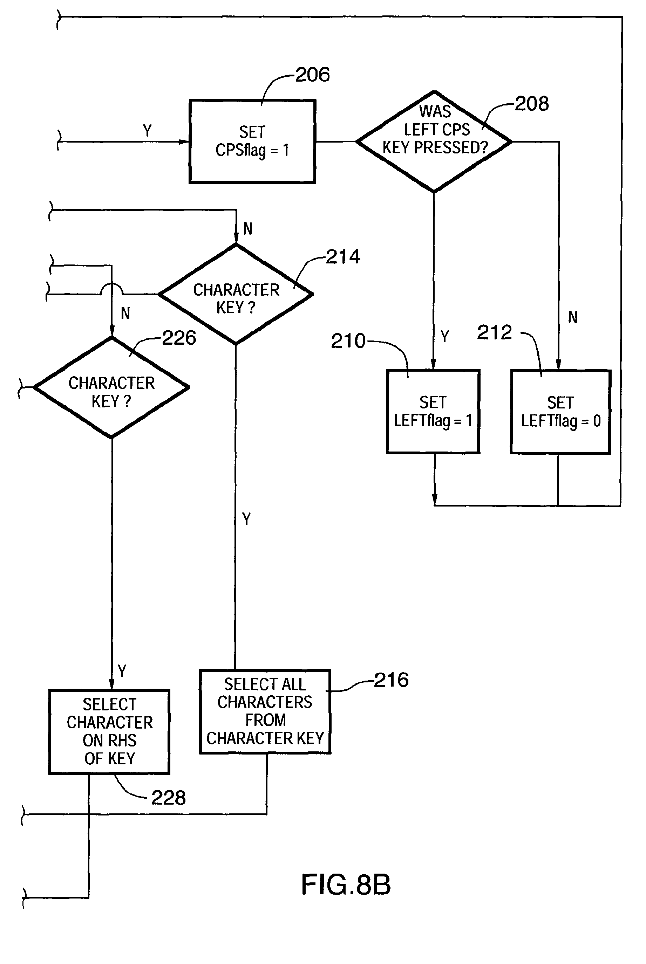

Turning to Figure 8, a further embodiment of a method of determining typed characters in a mobile communication device for use with the mobile communication device of Figure 1 is shown. This embodiment is directed at a method where there is a 1 to 1 correlation between pressing a character position select key and a multiple alphabetic character key 30 or multiple alphabetic-numeric character key 32 such that if the user holds down the character position select key for an extended period of time, only the initial pressing of the character position select key is recognized by the processor.

Initially, the processor waits for a key to be pressed (step 200). Once it senses that a key is pressed, a check is performed to see if a variable CPSflag is set to 0 (step 202). As above, CPSflag represents whether or not a character position select key has been previously pressed.

If CPSflag = 0, then a check is performed to verify if the key that is pressed is a character position select (CPS) key (step 204). If the pressed key is a character position select key, CPSflag is set to 1 (step 206). After setting CPSflag equal to 1, a check is performed to verify if the left directional key 24 is pressed (step 208). If the left directional key 24 is pressed, a variable LEFTflag is set to 1 (step 210), otherwise LEFTflag is set to 0 (step 212). After the variable LEFTflag has been set, the processor waits for the next key to be pressed (step 200).

However, if at step 204, a character position select key has not been pressed, the processor determines whether or not a character key is pressed (step 214). If a character key is pressed, the characters corresponding to the depressed character key are selected (step 216) and predictive software is then applied to the current set of stored characters (step 218) to determine if there are any possible words corresponding with the groups of stored characters before setting CPSflag to 0 (step 230) and returning to wait for the next key to be pressed (step 200). However, if at step 214, a character key is not pressed, the function corresponding to the depressed key is performed (step 225) before returning to wait for the next key to be pressed (step 200).

If, at step 202, the variable CPSflag is not equal to 0, then a check is performed to verify whether or not the variable LEFTflag is equal to 1 (step 220) indicating that the left directional key has been previously pressed. If LEFTflag has been set to 1, a check is performed to verify that the key that is depressed is a character key (step 222). If the key is a multiple alphabetic character key 30 or multiple alphabetic-numeric character key 32, then the character on the left side of the depressed key is selected (step 224) and sent to the processor where predictive software is then applied to the set of stored characters (step 218) to determine if a defined word corresponds with the set of stored characters before setting CPSflag to 0 (step 230) and returning to wait for the next key to be pressed (step 200).

However, if at step 222, a character key has not been pressed, a check is performed to verify if a new character position select key has been pressed (step 240). If a new character position select key has been pressed, the function is performed (step 225) and then CPSflag is set to 0 before returning to wait for the next key to be pressed (step 200). If a new character position select key is pressed (at step 240), a check is performed to verify if the left character position select key is pressed (step 242). If the left character position select key is pressed, the function is performed (step 225) and then CPSflag is set to 0 before returning to wait for the next key to be pressed (step 200). On the other hand, if the left character position select key is not pressed (at step 242), LEFTflag is set to 0 before returning to wait for the next key to be pressed (step 200).

If LEFTflag does not equal 1 at step 220, this indicates that the right directional key has been previously depressed. A check is then performed to verify that the key that was depressed is a character key (step 226). If the key is a multiple alphabetic character key 30 or multiple alphabetic-numeric character key 32, then the character on the right side of the depressed key is selected (step 228) and sent to the processor where predictive software is then applied to the set of stored characters (step 218) to determine if a defined word corresponds with the set of stored characters before setting CPSflag to 0 (step 230) and returning to wait for the next key to be pressed (step 200).

However, if at step 226 a character key has not been pressed, a check is performed to verify if a new character position select key has been pressed (step 246. If a new character position select key has been pressed, the function is performed (step 225) and then CPSflag is set to 0 before returning to wait for the next key to be pressed (step 200). If a new character position select key is pressed (at step 246, a check is performed to verify if the left character position select key is pressed (step 248). If the left character position select key is not pressed, the function is performed (step 225) and then CPSflag is set to 0 before returning to wait for the next key to be pressed (step 200). On the other hand, if the left character position select key is pressed (at step 248), LEFTflag is set to 0 (step 249) before returning to wait for the next key to be pressed (step 200).

It will be understood that in this embodiment, pressing the left directional key twice cancels the original left directional key selection and that pressing the left direction key once and then the right directional key also cancels the left directional key selection. It may be also set that by pressing the right directional key after pressing the left directional key results in the right directional key being selected.

In another embodiment, if the individual does not release the character position select key after the predictive software has been applied, upon the processor's return to step 100, the processor immediately senses that a character position select key has been depressed and proceeds to check if the character position select key is the left directional key (step 104).

Furthermore, in yet another embodiment, a single tap/depression of the character position select key may indicate a first character position while a double tap of the character position select key may indicate a second character position. This is with respect to the mobile communication device of Figure 3.

It will be understood that the invention is not restricted to only one or two character position select keys. The number of character position select keys (or directional keys) may be equal to the number of characters which are assigned to each multi-alphabetic or multiple alphabetic-numeric character key. Furthermore, there may be a single character position select key which may be used to indicate multiple character positions rather than a single character position select key representing one character position.

For operation of these embodiments which include more than two character position select keys, the method is quite similar to the flowchart outlined in the Figures corresponding to the multiple character position select key embodiments with the addition of further checks to determine which of the plurality of character position select keys has been depressed. However, as shown in the flowchart of Figure 4, when there is only one character position select key, there is no extra step of determining which character positional select key has been depressed.

As will be understood by one skilled in the art, the methods of the invention may be implemented via software modules, firmware or hardware or a combination thereof.

The above-described embodiments of the invention are intended to be examples only. Alterations, modifications and variations may be effected to the particular embodiments by those of skill in the art without departing from the scope of the invention, which is defined solely by the claims appended hereto.

## Claims

1. A method of determining which of several characters designated by any one of a number of particular character keys of a keyboard of a mobile communication device is intended by a user, comprising the steps of:
sensing depression of a character position select key;
sensing depression of one of said character keys; and
designating depressions of said character key to indicate a character corresponding to a unique combination of said depressed character position select key and said depressed character key.

2. The method of Claim 1 wherein said character position select key is a directional key.

3. The method of Claim 2 wherein said directional key indicates a position of said selected character with respect to said several characters on said character key.

4. The method of any one of Claims 1 to 3 further comprising the step of applying predictive software to a set of selected characters.

5. The method of any one of Claims 1 to 4 wherein said steps of sensing are performed concurrently.

6. The method of any one of Claims 1 to 4 wherein said step of sensing depression of one of said character keys occurs after said step of sensing depression of said character position select key.

7. The method of any one of Claims 1 to 6 further comprising the step, occurring after said step of sensing depression of said character position select key, of:
sensing release of said character position select key.

8. The method of any one of claims 1 to 7 wherein said step of sensing depression of a character position select key comprises the steps of:
sensing depression of a first key; and
determining if said depressed first key is a character position select key;
and if said first key is a character position select key, selecting a character associated with a depressed second key if said depressed second key is a character key corresponding to said character position select key.

9. The method of Claim 8 further comprising the steps, occurring after said step of determining, of:
setting a character position select flag to 1 if said first key is a character position select key; and
setting a character position select flag to 0 if said first key is not a character position select key.

10. The method of Claim 9 comprising the steps, after said step of setting a character position select flag, of:
determining if said first key is a left directional key;
setting a directional key flag to 1 if said first key is said left directional key; and
setting a directional key flag to 0 if said first key is said left directional key.

11. The method of any one of Claims 8 to 10 further comprising the step of:
associating said selected character with a set of previously selected characters to form a current set of characters.

12. The method of Claim 11 further comprising the step of:
applying predictive software to said current set of characters.

13. The method of any one of Claims 8 to 12 further comprising the step of:
performing a function corresponding to said function key when said second key is a function key.

14. The method of any one of Claims 8 to 13 further comprising the step of:
returning to said step of sensing a second key when said second key is not a character key.

15. The method of any one of Claims 8 to 14 further comprising the step of:
returning to said step of sensing depression of a first key when said second key is not a character key.

16. A machine readable medium comprising program code means executable in a processor of a mobile communications device for implementing a method of determining which of several characters designated by any one of a number of particular character keys of a keyboard of such device is intended by a user, said program code means implementing the method of any of claims 1 to 15.

17. A mobile communications device comprising the machine readable medium of claim 16.

18. A wireless communications system comprising at least one mobile communications device according to claim 17.

## Amended claims

### Amended claims in accordance with Rule 86(2) EPC.

**1.** A method of determining which of several characters designated by any one of a number of particular character keys of a keyboard of a mobile communication device is intended by a user, comprising the steps of:
sensing depression of a character position select key selected from a group of at least two individual character position select keys;
sensing depression of one of said character keys; and
designating depressions of said character key to indicate a character corresponding to a unique combination of said depressed character position select key and said depressed character key.

**2.** The method of Claim 1 wherein said character position select key is a directional key.

**3.** The method of Claim 2 wherein said directional key indicates a position of said selected character with respect to said several characters on said character key.

**4.** The method of any one of Claims 1 to 3 further comprising the step of applying predictive software to a set of selected characters.

**5.** The method of any one of Claims 1 to 4 wherein said steps of sensing are performed simultaneously.

**6.** The method of any one of Claims 1 to 4 wherein said step of sensing depression of one of said character keys occurs after said step of sensing depression of said character position select key.

**7.** The method of any one of Claims 1 to 6 further comprising the step, occurring after said step of sensing depression of said character position select key, of:
sensing release of said character position select key.

**8.** The method of any one of claims 1 to 7 wherein said step of sensing depression of a character position select key comprises the steps of:
sensing depression of a first key; and
determining if said depressed first key is a character position select key; and if said first key is a character position select key, selecting a character associated with a depressed second key if said depressed second key is a character key corresponding to said character position select key.

**9.** The method of Claim 8 further comprising the steps, occurring after said step of determining, of:
setting a character position select flag to 1 if said first key is a character position select key; and
setting a character position select flag to 0 if said first key is not a character position select key.

**10.** The method of Claim 9 comprising the steps, after said step of setting a character position select flag, of:
determining if said first key is a left directional key;
setting a directional key flag to 1 if said first key is said left directional key; and
setting a directional key flag to 0 if said first key is said left directional key.

**11.** The method of any one of Claims 8 to 10 further comprising the step of:
associating said selected character with a set of previously selected characters to form a current set of characters.

**12.** The method of Claim 11 further comprising the step of:
applying predictive software to said current set of characters.

**13.** The method of any one of Claims 8 to 12 further comprising the step of:
performing a function corresponding to said function key when said second key is a function key.

**14.** The method of any one of Claims 8 to 13 further comprising the step of:
returning to said step of sensing a second key when said second key is not a character key.

**15.** The method of any one of Claims 8 to 14 further comprising the step of:
returning to said step of sensing depression of a first key when said second key is not a character key.

**16.** A machine readable medium comprising program code means executable in a processor of a mobile communications device for implementing a method of determining which of several characters designated by any one of a number of particular character keys of a keyboard of such device is intended by a user, said program code means implementing the method of any of claims 1 to 15

**17.** A mobile communications device comprising the machine readable medium of claim 16

**18.** A wireless communications system comprising at least one mobile communications device according to claim 17.

**19.** A mobile communication device comprising:
at least two character position select keys; and
a plurality of character keys;
wherein said at least two character position select keys are used in combination to determine which of a plurality of characters designated by any one of said plurality of character keys is intended by a user.

**20.** The mobile communication device of Claim 19 wherein said character position select key are directional keys.

**21.** The mobile communication device of Claim 20 wherein said directional key indicates a position of said selected character with respect to said several characters on said character key.

**22.** The mobile communication device of any one of Claims 19 to 21 programmed with predictive software to a set of selected characters
